# NOUVEAU FASCICULE DE BREVET EUROPEEN

(11) **EP 3 733 457 B2**
(45) Date de publication et mention de la décision concernant l'opposition: **18.11.2026**
(45) Mention de la délivrance du brevet: 01.06.2022
(21) Numéro de dépôt: 20171969.7
(22) Date de dépôt: 29.04.2020
(51) Int. Cl.: B60R 13/04, B29C 45/16

(54) **PIÈCE DE CARROSSERIE COMPORTANT UNE ZONE DE RÉTRO ÉCLAIRÉE**
KARROSSERIETEIL, DAS EINE ZONE MIT HINTERGRUNDBELEUCHTUNG UMFASST
BODYWORK PART COMPRISING A BACKLIT AREA

(30) Priorité: 03.05.2019 FR 1904692
(43) Date de publication de la demande: 04.11.2020
(73) Titulaire: OPmobility SE, 69007 Lyon (FR)
(72) Inventeur: JACQUEMET, Thierry, 01150 Sainte-Julie (FR); TRESSE, David, 01150 Sainte-Julie (FR); BRIZIN, Jérôme, 01150 Sainte-Julie (FR); GUILLIER, Stéphane, 01150 Sainte-Julie (FR)
(74) Mandataire: LLR

(56) Documents cités:
- EP-A1- 2 732 955
- EP-A2- 2 628 638
- DE-A1- 102006 055 996
- DE-A1- 102011 102 532
- DE-A1- 102011 112 835
- DE-A1- 102012 003 200
- DE-A1- 102014 110 084
- DE-A1- 102017 006 693
- DE-A1- 4 109 532
- DE-T2- 602006 000 183
- DE-U1- 20 021 312
- FR-A1- 2 933 664
- FR-A1- 2 972 402
- FR-A1- 3 073 471
- https://www.yumpu.com/de/documenVview/6858809/sgm-sonderverfahren-im-spritz guss (Online verfügbar seit dem 28.12.2012
- Spritzgießwerkzeuge Auslegung, Bau, Anwendung; 6. Auflage; ©Carl Hanser Verlag, München 2007; ISBN: 978-3-446-40601-8
- Fachartikel „Verfahren und Trends beim Spritzgießen"; Kunststoffe;© Carl Hanser Verlag. München 2000

## Description

L'invention concerne le domaine de l'industrie automobile, et plus particulièrement une pièce de carrosserie de véhicule automobile comportant un élément transparent ou translucide.

Un élément est qualifié de transparent lorsqu'il se laisse traverser par la lumière dans le domaine du visible. On considère qu'un élément ayant une transmittance de 90% environ est transparent. Un élément est qualifié de translucide lorsqu'il se laisse traverser par la lumière dans le domaine du visible, mais sans permettre de distinguer nettement les objets. On considère qu'un élément ayant une transmittance de 60% environ est translucide.

La transmittance d'un matériau est la fraction du flux lumineux le traversant. Ainsi la transmittance représente le rapport de l'intensité lumineuse transmise par le matériau sur l'intensité lumineuse incidente.

On connaît des éléments rapportés sur une pièce de carrosserie ayant notamment pour objet de mettre en valeur le style d'un véhicule, comme une ligne ou une forme dans le but de renforcer l'image que le constructeur souhaite associer à son modèle de véhicule. Il existe par exemple des baguettes ou joncs chromés placés sur le bord d'une pièce ou d'un équipement. Dans le but de renforcer l'effet esthétique produit par ces éléments de carrosserie il a été proposé de placer une source lumineuse derrière une surface transparente de l'élément de carrosserie.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie.

Il est connu des pièces de carrosserie issues de moulage de matière plastique, et sur lesquelles un élément transparent est rapporté dans un logement prévu à cet effet.

Ces éléments transparents présentent l'inconvénient de devoir être parfaitement adaptés au logement présent dans la pièce de carrosserie. De plus, l'assemblage de tels éléments optiques sur des pièces de carrosserie, à l'inconvénient de présenter des jeux d'assemblage et des affleurements de moindre qualité visuelle que celle requise pour un véhicule automobile. Enfin, de tels éléments rapportés engendrent une complexité dans la gestion de l'étanchéité.

On connaît également du document EP2732955 une méthode de fabrication de pièce de carrosserie comprenant un support en plastique et une vitre en plastique. Toutefois, cette méthode ne permet d'obtenir une pièce solide et étanche.

L'invention a notamment pour but de remédier à ces inconvénients en proposant un procédé de fabrication d'une pièce de carrosserie en plastique peinte comprenant une zone transparente ou translucide, qui est simple, efficace et peu coûteux. L'invention a également pour but une pièce de carrosserie en plastique peinte comprenant une zone transparente solide et étanche.

A cet effet l'invention a pour objet un procédé de fabrication d'une pièce de carrosserie en plastique peinte selon la revendication 1.

Ce procédé permet d'obtenir une pièce de carrosserie d'un seul tenant qui est constituée de deux matières différentes et qui présente une zone transparente ou translucide. La pièce obtenue est particulièrement solide et ne présente pas d'interstice, ni de jeu ou de désaffleurement formés par le montage de deux pièces ce qui peut nuire à l'aspect et à l'étanchéité de la pièce.

On entend par « matériau transparent » tout matériau qui a un rendu transparent ou translucide comme défini précédemment dans la présente demande. Cette propriété de transparence du matériau permet d'apporter une fonction de rétro éclairage sur une pièce de carrosserie car la zone transparente laisse passer de la lumière qui vient d'une source lumineuse agencée derrière la pièce de carrosserie. La lumière projetée à travers la zone transparence permet de renforcer l'image que le constructeur souhaite associer à son modèle de véhicule, ou de fournir une information visuelle aux usagers depuis l'extérieur du véhicule ce qui est souvent à la demande des stylistes des constructeurs automobiles.

Le procédé tel que proposé par la présente invention a pour avantage d'utiliser un moule standard existant permettant de mouler simultanément deux matières sans aucun dispositif mécanique séparant les zones de chaque matière (par exemple, de type à écluse ou moule rotatif) ce qui réduit le coût et le temps de production d'une pièce bi-matière.

Selon l'invention, le moule est relié à une pluralité de buses d'injection destinées à être pilotées pour effectuer une succession d'injections programmées, les buses étant espacées entre elles par une distance d'au moins 10 mm et reliées aux réservoirs contenant des matières distinctes. On parle donc du pilotage unitaire et indépendant des buses d'injection. Ceci permet de faire varier les la position des lignes de rencontre des deux fronts de matières en fonction de la taille et/ou de l'agencement des zones transparentes prévues. Le moule est ouvert lorsque toutes les injections sont finies.

Suivant d'autres caractéristiques optionnelles correspondant à différents modes de réalisation du procédé de fabrication, prises seules ou en combinaison :

Cette méthode, dite de « grattage laser », permet d'obtenir un contour très précis pour les zones transparentes. Cette alternative est particulièrement avantageuse pour réaliser des zones non peintes de petites dimensions ou avec des formes et contours complexes.
- La zone prédéfinie se trouve au moins en partie, de préférence en totalité dans la partie transparente de la pièce de carrosserie moulée. Le marouflage de la zone prédéfinie avant peinture ou le grattage laser après peinture permet alors d'obtenir une zone non peinte de surface inférieure à celle de la partie transparente. Pour une surface de la zone transparente donnée, il est facile de changer la forme de la zone prédéfinie car seulement la forme du film de marouflage ou le parcours programmé du faisceau laser est à changer.
- Dans le but d'une régulation précise des masses injectées, il est préférable d'avoir une unité d'alimentation distincte ayant une capacité d'injection spécifique pour chaque matière injectée. Il est possible d'avoir un programme pour l'alimentation de la première matière et un programme spécifique pour l'alimentation de la seconde matière. Cependant, pour des raisons de répétabilité sur la position de la ligne de jonction entre les deux matières, il est préférable que le même programme soit utilisé pour les alimentations des deux matières. Ainsi, il est possible et facile de réaliser une pièce comprenant une zone transparente en utilisant un moule qui est initialement conçu pour une pièce mono matière.
- Le procédé comprend une étape de détermination de la séquence d'ouverture et fermeture des buses d'injection ainsi que la quantité de matière injectée pour chaque buse d'injection. Lorsqu'une matière injectée est moins résistante que l'autre, cette étape permet d'ajuster la proportion entre les deux matières à injecter afin d'obtenir une pièce présentant des zones transparentes satisfaisantes tout en répondant aux exigences en matière de résistance aux chocs.

La forme et la taille de la zone transparente est facilement modifiable, par exemple en fonction des variantes de taille et de forme de la zone prédéfinie à réaliser car uniquement la séquence d'ouverture et de fermeture des buses d'injection est à changer pour modifier la surface d'expansion de la matière transparente par rapport à celle de la matière opaque dans la cavité.

Pour chaque nouvelle pièce de carrosserie à réaliser et pour le moule d'injection qui lui est associé, les buses d'injection sont programmées pour effectuer des ouvertures et fermetures synchronisées. Elles sont également localisées dans la cavité du moule de façon à ce que l'emplacement des zones transparentes soit respecté. Une étude de rhéologie préalable doit être effectuée afin de déterminer ces paramètres de position et de séquencement. En fonction de la pièce à réaliser et du moule utilisé, l'étude préalable de rhéologie positionne les buses en fonction des différentes variantes de zones transparentes à savoir réaliser. Avec ces positions de buses de définies, on peut faire varier leur synchronisation pour obtenir un nombre ou des tailles de zones transparentes différentes.
- La première matière est choisie parmi : polypropylène (PP) EDDM chargé talc, polyamide (PA), polycarbonate (PC), acrylonitrile butadiène styrène (ABS), mélange de polycarbonate (PC) et acrylonitrile butadiène styrène (ABS).
- La seconde matière est choisie parmi : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène (ABS), polystyrène (PS) et polyméthacrylate de méthyle (PMMA).

Le choix des première et seconde matière à injecter n'est pas limité aux listes des matières citées ci-dessus. En revanche, il convient de choisir des matières qui sont compatibles au niveau de leur ligne de jonction dans la chambre de moulage par miction, cohésion ou fusion. Sur la base de ce critère et en fonction du degré de transparence ou des couleurs souhaitées et de l'aspect de la seconde zone, l'homme du métier saurait trouver une combinaison de matières adéquate.

Lorsque la pièce de carrosserie à réaliser est un parechoc, la première matière injectée sera opaque, de façon générale noire, car le cahier des charges, notamment aux chocs, requiert l'utilisation de polypropylène (PP) EDDM chargé en talc. Cette matière sera peinte par la suite pour avoir une couleur souhaitée, le plus souvent en ton caisse. Il est toutefois possible de réaliser tout autre type de pièce de carrosserie constituée de deux matières transparentes.

Lorsque la pièce de carrosserie peinte est de plus petite taille qu'un parechoc, il est possible d'utiliser aussi de la matière transparente pour la première matière. Ainsi en exploitant la transparence de la première matière et/ou du fait de la mouler localement à épaisseur réduite, il est alors possible d'obtenir une zone de rétroéclairage au travers de la peinture, et présentant alors un aspect différent de celui la zone prédéfinie et non peinte constituée de la seconde matière. Les deux matières peuvent également avoir des couleurs différentes pour obtenir des variantes d'aspect encore différentes.

L'invention a également pour objet une pièce de carrosserie obtenue par le procédé de fabrication tel que décrit précédemment. La pièce peut être symétrique ou asymétrique. Le pourcentage en masse de la seconde matière présente dans la pièce de carrosserie est compris entre 0 et 30%, de préférence entre 5 et 20%. La seconde matière peut être présente dans plusieurs zones distinctes et disjointes ayant éventuellement chacune un aspect différent, par exemple deux zones transparentes en polycarbonate (PC) de teinte différente. Dans ce cas, la pièce présente trois matières différentes.

L'invention a encore pour objet un véhicule automobile comprenant au moins une pièce de carrosserie telle que décrite précédemment.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective d'un véhicule automobile comprenant une pièce de carrosserie obtenue par un procédé de fabrication selon l'invention ;
[Fig. 2] est une vue de face de la pièce de carrosserie à l'issue d'une étape de moulage selon l'invention ;
[Fig. 3] est une vue de face de la pièce de carrosserie peinte et présentant des zones transparentes selon une première variante ;
[Fig. 4] est une vue de face de la pièce de carrosserie peinte et présentant des zones transparentes selon une deuxième variante.

### Description détaillée

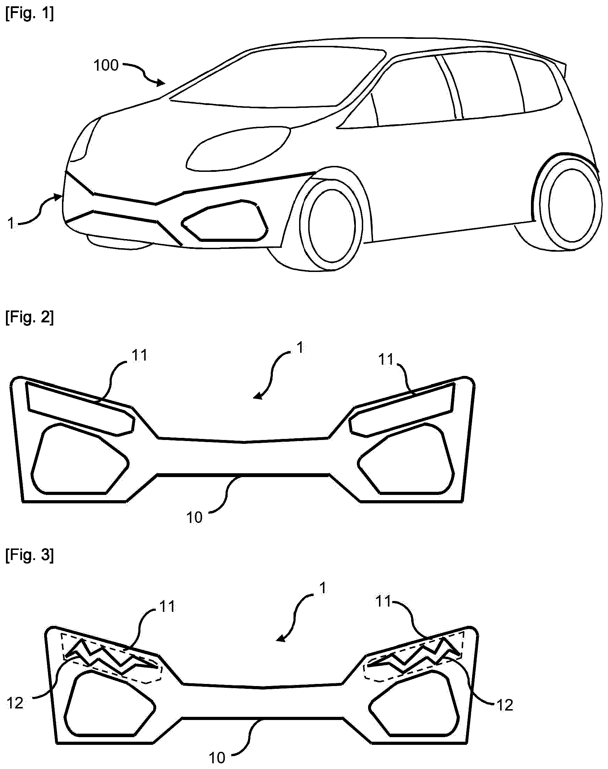

On a représenté sur la figure 1 un véhicule automobile 100 comprenant une pièce de carrosserie 1 qui est un parechoc selon un mode de réalisation de l'invention.

Selon une première variante telle que visible aux figures 2 et 3, le parechoc 1 est réalisé de deux matières différentes. Ainsi, le parechoc 1 comprend une première zone 10 constituée d'une première matière, par exemple, du polypropylène (PP) EDDM chargé talc noir et deux secondes zones 11 constituées d'une seconde matière, par exemple du polypropylène naturel translucide. Le moule utilisé pour réaliser le parechoc selon la deuxième variante comprend une ou plusieurs buses d'injection de la première matière qui sont agencées à proximité de la première zone et une ou plusieurs buses d'injection de la seconde matière qui sont agencées à proximité des secondes zones. Les deux matières sont injectées dans une seule étape de moulage selon un programme d'injection prédéfini, le moule restant fermé.

Un marouflage est ensuite effectué dans les secondes zones 11. Deux films ayant des formes symétriques sont posés dans les secondes zones 11 et sont tenus par un adhésif. Les parties recouvertes des films correspondent à des zones prédéfinies 12 destinées à être non peintes et transparentes. Une peinture est appliquée sur le parechoc 1 avant que les films soient retirés du parechoc.

Comme illustré à la figure 3, après la peinture et le retrait des films, on obtient un parechoc 1 peint sauf les zones prédéfinies 12 qui restent transparentes.

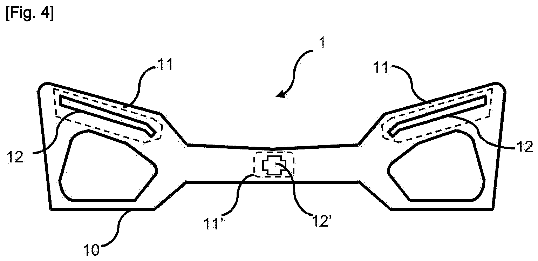

La figure 4 illustre une deuxième variante de l'invention selon laquelle le parechoc 1 comprend une pluralité de zones transparentes, symétriques ou non. Dans cette variante, une ou plusieurs buses supplémentaires sont ajoutées dans le moule afin d'injecter la seconde matière ou une troisième matière dans une zone centrale 11'. Un marouflage est effectué dans la zone centrale 11' pour obtenir une nouvelle zone prédéfinie 12' non peinte et transparente ayant une forme différente que les autres zones prédéfinies 12.

L'invention n'est pas limitée aux modes de réalisation présentés et d'autres modes de réalisation apparaîtront clairement à l'homme du métier. Notamment, la transparence dans les zones prédéfinies 12 peuvent également être obtenue par le grattage laser dans ces zones après que le parechoc est peint dans sa totalité.

## Revendications

1. Procédé de fabrication d'une pièce de carrosserie (1) en plastique peinte comprenant une première zone constituée (10) au moins partiellement d'une première matière et comprenant au moins une seconde zone (11) transparente ou translucide constituée d'une seconde matière, le procédé comprenant une étape de moulage consistant à injecter dans un moule la première matière pour former la première zone (10) et une seconde matière pour former la seconde zone (11) et une étape de peinture au moins sur la première zone (10), le procédé comprenant les étapes suivantes :
- peindre l'ensemble de la pièce de carrosserie (1) ;
- enlever la peinture située dans une zone prédéfinie (12) sur tout ou partie de la pièce de carrosserie (1) au moyen d'un faisceau laser,
le moule étant relié à une pluralité de buses d'injection destinées à être pilotées pour effectuer une succession d'injections programmées, les buses étant espacées entre elles par une distance d'au moins 10 mm et reliées aux réservoirs contenant des matières distinctes,
**caractérisé en ce que** les deux matières sont injectées dans une seule étape de moulage selon un programme d'injection prédéfini, le moule restant fermé.

2. Procédé selon la revendication précédente dans lequel la zone prédéfinie (12) se trouve au moins en partie, de préférence en totalité dans la partie transparente (12) de la pièce de carrosserie (12) moulée.

3. Procédé selon l'une des revendications précédentes comprenant une étape de détermination de la séquence des injections ainsi que la quantité de matière injectée pour chaque buse d'injection.

4. Procédé selon l'une des revendications précédentes dans lequel la première matière est choisie parmi : polypropylène (PP) EDDM chargé talc, polyamide (PA), polycarbonate (PC), acrylonitrile butadiène styrène (ABS), mélange de polycarbonate (PC) et acrylonitrile butadiène styrène (ABS).

5. Procédé selon l'une des revendications précédentes dans lequel la seconde matière est choisie parmi : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène (ABS), polystyrène (PS) et polyméthacrylate de méthyle (PMMA).

6. Pièce de carrosserie (1) obtenue par le procédé de fabrication selon l'une des revendication 1 à 5.

7. Véhicule automobile comportant au moins une pièce de carrosserie (1) selon la revendication précédente.

## Patentansprüche

1. Verfahren zur Herstellung eines lackierten Karosserieteils (1) aus Kunststoff, aufweisend einen ersten Bereich (10), der zumindest teilweise aus einem ersten Material besteht, und aufweisend mindestens einen zweiten transparenten oder transluzenten Bereich (11), der aus einem zweiten Material besteht, wobei das Verfahren einen Formgebungsschritt umfasst, der darin besteht, das erste Material in eine Form einzuspritzen, um den ersten Bereich (10) zu bilden, und ein zweites Material einzuspritzen, um den zweiten Bereich (11) zu bilden, sowie einen Lackierschritt zumindest auf dem ersten Bereich (10), wobei das Verfahren die folgenden Schritte umfasst:
- Lackieren des gesamten Karosserieteils (1);
- Entfernen des in einem vordefinierten Bereich (12) auf dem gesamten Karosserieteil (1) oder einem Teil davon befindlichen Lacks mittels eines Laserstrahls,
wobei die Form mit einer Mehrzahl von Einspritzdüsen verbunden ist, die dazu bestimmt sind, angesteuert zu werden, um eine Abfolge programmierter Einspritzungen durchzuführen, wobei die Düsen voneinander um einen Abstand von mindestens 10 mm beabstandet sind und mit Behältern verbunden sind, die unterschiedliche Materialien enthalten,
**dadurch gekennzeichnet, dass** die beiden Materialien in einem einzigen Formgebungsschritt gemäß einem vordefinierten Einspritzprogramm eingespritzt werden, wobei die Form geschlossen bleibt.

2. Verfahren nach dem vorhergehenden Anspruch, wobei sich der vordefinierte Bereich (12) zumindest teilweise, vorzugsweise vollständig, in dem transparenten Teil (12) des geformten Karosserieteils (12) befindet.

3. Verfahren nach einem der vorhergehenden Ansprüche, umfassend einen Schritt des Bestimmens der Abfolge der Einspritzungen sowie der Menge des für jede Einspritzdüse eingespritzten Materials.

4. Verfahren nach einem der vorhergehenden Ansprüche, wobei das erste Material ausgewählt ist aus: Polypropylen (PP), talcgefülltem EDDM, Polyamid (PA), Polycarbonat (PC), Acrylnitril-Butadien-Styrol (ABS), einer Mischung aus Polycarbonat (PC) und Acrylnitril-Butadien-Styrol (ABS).

5. Verfahren nach einem der vorhergehenden Ansprüche, wobei das zweite Material ausgewählt ist aus: natürlichem transluzentem Polypropylen, Cycloolefin-Copolymeren (COC), Polyethylen (PE), Polyamid (PA), Polycarbonat (PC), Acrylnitril-Butadien-Styrol (ABS), einer Mischung aus Polycarbonat (PC) und Acrylnitril-Butadien-Styrol (ABS), Polystyrol (PS) und Polymethylmethacrylat (PMMA).

6. Karosserieteil (1), erhalten durch das Herstellungsverfahren nach einem der Ansprüche 1 bis 5.

7. Kraftfahrzeug, aufweisend mindestens ein Karosserieteil (1) nach dem vorhergehenden Anspruch.

## Claims

1. A method of manufacturing a painted plastic body panel (1) comprising a first zone (10) made at least partly of a first material and comprising at least one second zone (11) which is transparent or translucent and made of a second material, the method comprising a molding step consisting of injecting into a mold the first material to form the first region (10) and a second material to form the second region (11), and a painting step carried out at least on the first region (10), the method comprising the following steps:
- painting the entire body panel (1);
- removing the paint located in a predefined area (12) on all or part of the body panel (1) by means of a laser beam,
the mold being connected to a plurality of injection nozzles designed to be controlled to carry out a sequence of programmed injections, the nozzles being spaced apart by a distance of at least 10 mm and connected to tanks containing separate materials,
**characterized in that** the two materials are injected in a single molding step according to a predefined injection program, whilst the mold remains closed.

2. The method according to the preceding claim, in which the predefined area (12) is located at least partly, and preferably entirely, within the transparent portion (12) of the molded body panel (12).

3. The method according to one of the preceding claims, comprising a step of determining the sequence of injections as well as the quantity of material injected for each injection nozzle.

4. The method according to one of the preceding claims, in which the first material is selected from: polypropylene (PP) EDDM talc-loaded, polyamide (PA), polycarbonate (PC), acrylonitrile butadiene styrene (ABS), polycarbonate mixture (PC) and acrylonitrile butadiene styrene (ABS).

5. The method according to one of the preceding claims, in which the second material is selected from: translucent natural polypropylene, cyclo olefins copolymers (COC), polyethylene (PE), polyamide (PA), polycarbonate (PC), acrylonitrile butadiene styrene (ABS), polycarbonate mixture (PC), acrylonitrile butadiene styrene (ABS), polystyrene (PS) and polymethyl methacrylate (PMMA).

6. A body panel (1) obtained by the manufacturing method according to any one of claims 1 to 5.

7. A motor vehicle comprising at least one body part (1) according to the preceding claim.
